# EUROPEAN PATENT SPECIFICATION

(11) **EP 1 621 383 B1**
(45) Date of publication and mention of the grant of the patent: **12.12.2007**
(21) Application number: 03725202.0
(22) Date of filing: 07.05.2003
(51) Int. Cl.: B60J 5/04, B60R 13/02

(54) **DOOR**
TÜR
PORTIÈRE

(43) Date of publication of application: 01.02.2006
(73) Proprietor: GRUPO ANTOLIN-INGENIERIA, S.A., 09007 Burgos (ES)
(72) Inventor: MARTINEZ MORAL, Francisco, J., E-09002 Burgos (ES); GARCIA GARCIA, Rafael, E-09003 Burgos (ES); SANTAOLALLA GIL, Joaquin, E-09003 Burgos (ES); CORRALES ORTEGA, Cristina, E-09001 Burgos (ES)
(74) Representative: Esteban Perez-Serrano, Maria Isabel
(86) International application number: PCT/ES2003/000203
(87) International publication number: WO 2004/098934

(56) References cited:
- DE-A- 19 714 404
- FR-A- 2 802 153
- US-A- 4 648 208
- US-A- 5 904 002
- US-A- 5 927 020

## Description

The present invention refers to a vehicle door with a modular system on the door panel.

The area of application of this invention is, logically, centred on car doors in general and more specifically in those that use non-structural modular systems in which the mechanical and electrical systems are mounted in the non-structural door trim itself, already connected, adjusted and checked, ready for operation once installed on the door, also conserving the integral door structure.

There are currently different types of doors of which only some are adapted for the incorporation of modular sub-assemblies.

Generally, the systems normally used are based on doors with a traditional system of assembly from the inside of the door with respect to the vehicle.

Some of these solutions require modifications to the door structure, partially facilitating assembly and accessibility during installation and adjustment, but on the other hand harming the structural behaviour of the complete door, weakening it, so that the module itself must play a structural role to compensate for this weakening, with the incorporation of structural reinforcing elements.

For this reason, those solutions which, as in the case of this invention, allow modular installation without the need to modify the door structure are considered more advanced.

Among these latter types, there are various mechanical systems to integrate components in the vehicle door in a single modular assembly: door sub-assemblies mounted on a metallic or plastic base (door cassettes) and which can contain the door the mechanisms, window lifters and lock, wiring, loudspeaker, etc.
Structures with an exterior frame that include the exterior door frame, the window pane, the rear view mirror and window lifter and that can also contain an interior sub-structure to reinforce the door.
Others, carrier panels, can include the door mechanisms, window lifter and lock, the wiring, loudspeaker and sealing system, energy absorbing elements, and the panel with all its accessories, such as handles, pull grips, trim, pockets, controls, lights, etc.

Although this last solution is more complete, it requires handling inside the door once the trim has been fitted to affix and adjust the assembly and some of its components.

To do this, openings are made in the panel itself to provide access to the fixing components. It is also necessary to provide the appropriate trim elements to cover these openings once installation is complete.

This last solution, the most complete and advanced, is designed for assembly in doors with traditional structures, also needing, as described, accesses in the door trim and the appropriate elements to cover these accesses.

Examples of this type of elements can be found in applications EP-A-1043182 and WO-0162531 in favour of this applicant.

Despite the advantages of these modular systems compared to any conventional installation system, they offer some operational limitations when being installed in the door.

These arise mainly from the fact that the installation and final adjustment of the components and of the trim itself must all be made from the same side of the door on which the trim is mounted, and once it has been installed.

This fact requires the provision of accesses via the trim, limiting accessibility and visibility for carrying out these assembly operations. Also this form of assembly.

A basic object of the invention is a vehicle door equipped with a removable outer skin that uses modular systems incorporating the maximum number of functions and components, allowing the installation and removal of the modular system from the external side of the door together with the other components that must be a fitted to the door structure, thus avoiding the need for access openings in the side facing the door's interior trim.

This type of door equipped with an removable outer skin already exists on the market and offers the feature that they maintain their structure whole compared to traditional door concepts although the outer skin is assembled in one of the final assembly operations.

This feature is relevant for use with door modules since it facilitates certain assembly operations from the exterior of the door before the assembly of the skin.

The invention is defined by a door having the features of claim 1. The door modules includes an assembly in turn integrated on an interior non-structural door trim together with mechanical and electrical devices, the sealing strips system and better acoustical behaviour, the central door structure with structural functions on which the other components are installed and which in turn is fitted to the vehicle itself using the door hinges, and the outer door skin.

[0018b] the door components are mounted on the non-structural door trim using systems that allow certain free movements in order to make possible a suitable adaptation to the layout of the door structure during the door process assembly.

Generally, this assembly is fitted to the central door structure as follows: positioning and fixing of the interior trim on the door itself, usually using screws, rivets or clips, with the non-structural door trim carrying the modular system, sealing systems and heat and sound insulation layers; final fixing on the door, normally using screws, rivets or clips, of the other components such as a window lifters, lock, and door handles, passive safety systems, etc, which must be installed directly on it. In some cases, other sealing elements can also be incorporated, covering the accesses and holes made in the door itself for fitting components from the outermost part of the structure door - installation of the glass on the window lifter mechanism, installation of the outer door skin. The outer door skin can be fitted lastly and independently of the rest of the components in the door assembly.

The door panel and the components fixed to the door are assembled from its exterior side.

The fixings in general, both the non-structural door trim on the door and the other components fitted on it, are carried out from the external side of the door with the external skin removed, providing total visibility and accessibility to all the fixing points.

The outer skin can be removed for later repairs or to replace components or the panel itself.

There is also compatibility with different solutions for modular assembly as well as special adaptability to solutions based on a non-structural carrier door trim.

The non-structural door trim itself can be made in a single piece, eliminating all types of additional pieces, thus eliminating some sealing problems.

A carrier panel type door module specially designed for this type of door has the following features: no specific access areas are required for screwing the components; these screwing operations are carried out from the exterior side of the door and before the outer skin is fixed to the door structure.

This also renders unnecessary the use of removable plastic pieces, for example, medallions, a fact which is typical of the concept of carrier panel type modules designed to be installed from the interior side of the door.

The non-structural door trim is fixed to the structure using screws, clips or rivets, with the feature that these screwing or riveting operations of the door panel are made from the exterior part of the door before it is fixed to the door structure.

As described above, acoustic or sealing strips or covers can be used. These elements are positioned between the door module and the internal part of the door to improve the acoustic behaviour and to provide greater sealing against dust and water for the system.

It is also possible to use strips placed inside the door from the exterior before the final installation of the outer skin.

The door module may carry certain elements which later require a screwing operation in areas that are inaccessible from the inner part of the door, since these connections can also be made from the exterior side of the door before fixing the outer skin.

This type of elements are normal in doors, for example, energy absorbing elements, wiring, handles, moving parts of the door mechanism, etc.

The fact that the non-structural door trim does not need access areas for joining the elements it carries to the door structure allows them to be made without removable pieces for access.

Therefore, these non-structural door trims can be made in a single piece or in several pieces welded together, this being noticeably more economical and providing an important increase in rigidity and sealing. The degree of sound insulation of single piece non-structural door trims and those made of pieces welded together is therefore greater than that of trims with removable pieces that must be fixed using clips.

Another advantage of the invention when compared to carrier type modules described in applications EP-A-1043182 and WO-0162531 is that they do not need access areas, which make them totally independent when compared to the previous style of trim.

While in the traditional modular carrier type of panel systems the access areas were needed for screwing the structural sub-systems to the door, these areas are no longer necessary.

This avoids the need to create certain specific design lines to allow the joints to be integrated aesthetically and the limitations that this involves for the design of the panel. This is even more important in cases in which a design it is imposed for the trim that must comply with that of the car manufacturers' designers.

Because the operations of screwing the sub-systems are carried out from the exterior part of the door before the outer skin is fitted, which allows the use of screws or rivets, the need to create covers in the trim to hide the accesses and the screw or rivet heads is avoided.

Also, screwed joints are mechanically stronger than those used in the traditional trims with clips or plastic studs, thus guaranteeing greater dimensional stability, better performance under side shocks and a substantial improvement in noise insulation since they avoid areas with clearances or spaces through which the noise is communicated from the outside of the passenger cabin to its interior. For the same reason, the sealing of the system is much better.

The strips or pads and that are often incorporated between the door module and the door structure to improve the sealing against dust and water in extreme conditions or to improve sound levels, for example in high range vehicles, provide greater performance in the case of this invention since are they are never penetrated by screws or rivets but are fixed on the internal face of the trim or between it and the innermost surface of the door structure or on the outermost face of the door structure.

Likewise, modules with a removable outer skin, are extraordinarily easy to install and remove in the door since the operations from the exterior part of the door provide a high degree of ergonomics for the workers on the assembly-line by avoiding complicated accesses to certain components.

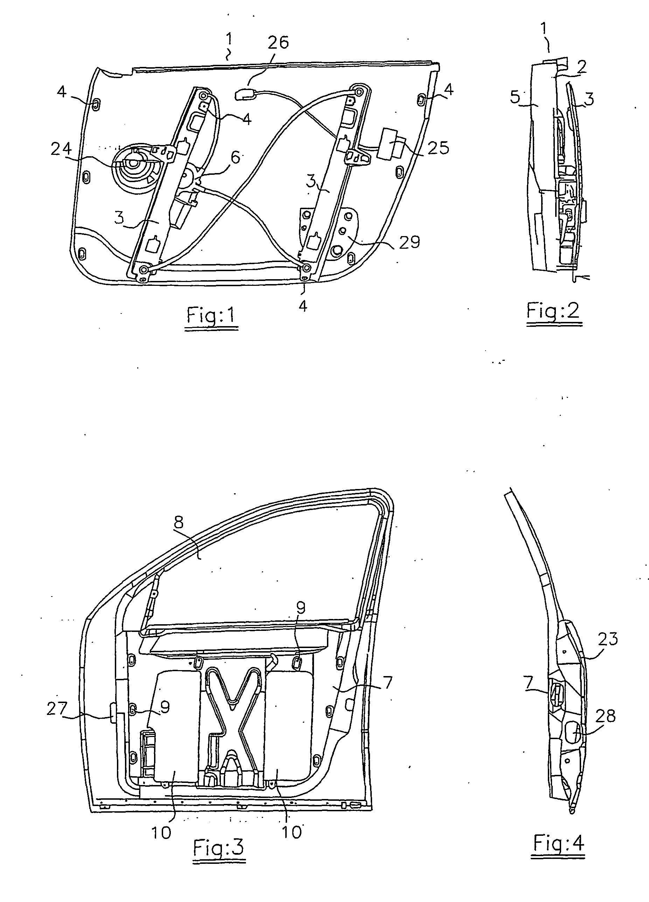

All of these details and other aspects of the invention are appreciated more specifically in the attached drawings which show the following: Figure 1 is a plan of the interior of a non-structural door trim with a series of elements of components incorporated.

Figure 2 is a side view of the above.

Figure 3 is a plan of the door structure seen from the trim side.

Figure 4 is a side view of Figure 3.

Figure 5 is a perspective view of the trim in Figure 1 that fits on to Figure 6.

Figure 6 is a perspective view of the door structure in Figure 3.

Figure 7 is a perspective view of the door structure with the trim fitted.

Figure 8 shows the preferred solution for a screwed joint for the window lifter rails that incorporates the non-structural door trim to the door structure.

Figure 9 is an enlarged detail of Figure 8.

Figure 10 shows the preferred solution for the screwed joint of the non-structural door trim to the door.

Figure 11 is an enlarged detail of the joint in Figure 10.

Figure 12 is a one of the variations of the joint shown in Figure 10.

Figure 13 is another variant on Figure 10.

Figures 1 and 2 show a non-structural door trim (1) with its face (2) on the side of the door structure, as a carrier panel, able to carry door components such as the window lifter rails (3) and the window lifter motor and reducer motor (6) and its fixing points (4), both on the non-structural door trim itself (1) and on the rails (3), to the door structure as well as other elements located in this housing such as the loudspeaker (24), lock (25) with its mechanism (26) for opening the door and the energy absorbing system (29) and the surrounding seal (18).

This non-structural door trim (1) shows a surface structure that is completely free of openings or accesses for assembly from its face (5) on the inside of the vehicle, so that all the operations are carried out from the inner face (2) shown in Figures 1 and 2 using screws or rivets.

This inner face (2) can also incorporate strips to provide sound installation or sealing, fixed on the surface of this face and between it and the door structure, logically freeing the outstanding areas of the various elements.

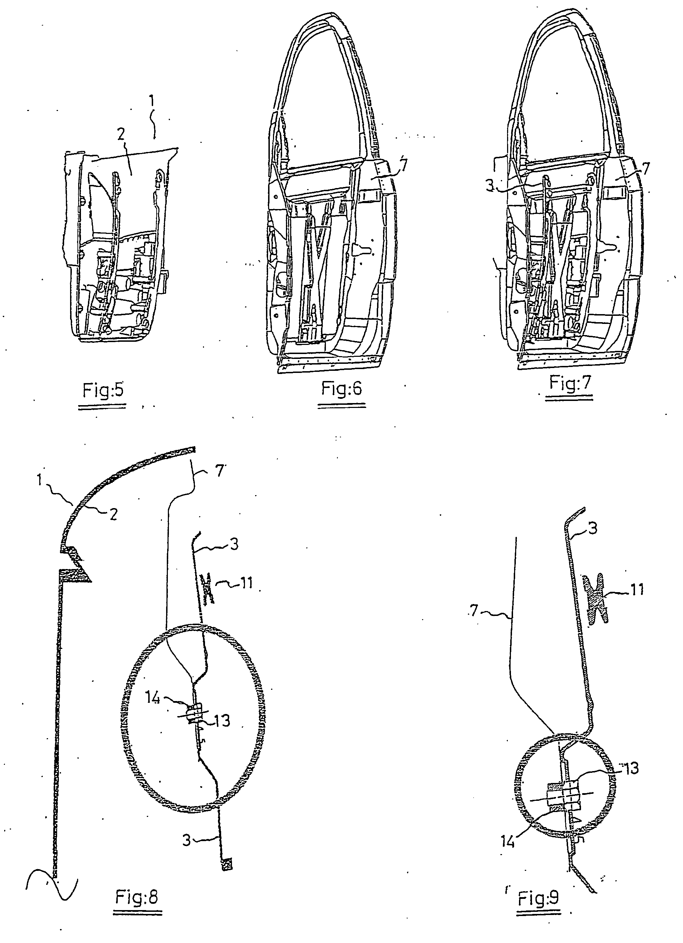

The door structure (7) in Figures 3 and 4 shows its face on the non-structural door trim side and the opposite face (23) for the fixing of the outer skin as well as the opening (8) for holding the window pane with free spaces (10) providing access to a door box as is shown with the location of the door hinges (27) and the grommets (28) for the electrical cables running from the bodywork to the door. The positions (9) show the points for connecting and fixing the non-structural door trim and the window pane once the non-structural door trim has been fitted with its different elements as shown in Figure 5, with the non-structural door trim (1), Figure 6 with the door structure and Figure 7 and this door structure with the non-structural door trim incorporated.

Once the non-structural door trim (1) has been offered up and fitted against the door structure (7), with various components filling the spaces (10) provided for the purpose, it is fixed by its external face to the structure using screws and/or rivets.

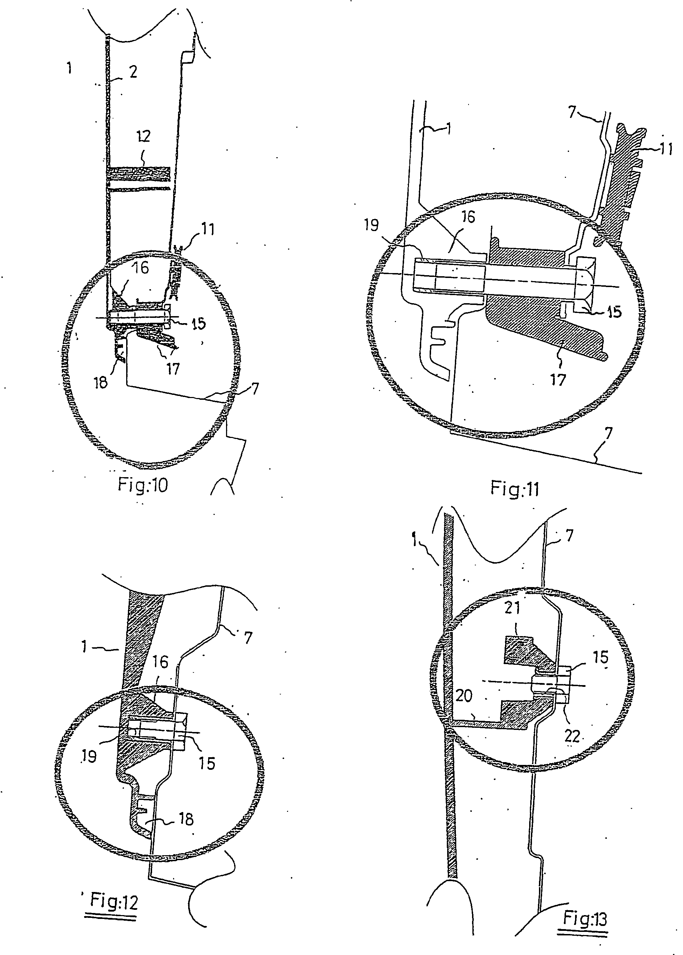

The rails (3) of the non-structural door trim (1) can be fixed on the door structure (7) in various ways. For example, the preferred solution in Figures 8 and 9 shows this being fixed using a bolt (13) whose head faces the outer part of the door with a bush (14) built into the door structure (7) itself into which it is threaded and tightened from the outside.

To make the screwed joint between the non-structural door trim and the door structure, a preferred solution in Figures 10 and 11 shows a stud (16) on the non-structural door trim itself in which there is a blind hole that includes a threaded bush (19) to receive a bolt. This bolt (15) is inserted from the door exterior and passes through a shim (17) fitted to the corresponding hole in the door structure (7). This piece (17) has a central hole that aligns with the stud (16) so that the bolt (15) fixes it when inserted from the exterior.

The under part of the non-structural door trim (1) shows the extension (18) for fitting the seals to the door structure (7). Likewise, a stud (12) on the non-structural door trim (1) allows it to be supported and seated suitably on the structure (7).

The constructional variation in Figure 12 shows the bolt (15) passing through the door structure, the stud (16) projecting from the lower part of the non-structural door trim, including the threaded bush (19) that receives the bolt (15) that is fitted and tightened from the exterior. The non-structural door trim here also shows the extension (18) to hold the seal between the trim non-structural door trim and the door.

In the solution in Figure 13, the non-structural door trim shows on its face on the door side the extension (20) for the stud (21) holding the bush (22) to receive the bolt (15) that is inserted from the outside before the outer skin is fitted.

The non-structural door trim (1) can be made in a single piece or with various pieces welded together without any removable parts, so its economy is notable and, also, its rigidity and sealing are increased.

With this non-structural door trim (1) made and with the various components such as window lifter mechanisms and lock, loudspeaker, etc, it is positioned and fixed to the door structure as described, also carrying the appropriate sealing systems and the pads to provide technical and sound insulation.

It is then fixed finally to the door with screws or rivets, with the rest of the components, window lifters, lock, door handles, passive safety systems, etc, all of which must be fitted directly to the door.

The final step is to fit the window pane onto the window lifter system and finally fit the outer door panel or skin, independently of the rest of the components in the door assembly

## Claims

1. Door in which a door module is mounted, the door module consisting of an interior non-structural door trim (1) as a carrier panel on which a series of door components are mounted, including at least window lifter mechanisms and lock device, the door consisting in a door structure (7) and in a removable outer skin, wherein the door structure is equipped on a non-structural door trim side with openings to provide the door components with access through the openings for the assembly of the door trim to the door structure ; the door components being mounted on the non-structural door trim using systems that allow a certain degree of freedom for a suitable adaptation to the layout of the door structure,
**characterized in that**
the interior non-structural door trim (1) is made as a single piece or with various pieces welded together and is free of openings or accesses from the inside of the vehicle, so that the non-structural door trim (1) together with its door components are placed to the door structure and fixed to the door from the external side of the door structure when the removable outer skin is taken away, the outer skin being fitted lastly and independently of the rest of the components to the door structure.

2. Door ,as in claim 1, **characterized in that** it carries all the elements connected, adjusted and checked mechanically and electrically between them, ready to operate once fixed to the door structure.

3. Door as in claim 1, **characterized in that** there are spaces between the door structure and the removable outer skin of the door for the sealing systems as well as layers of heat and sound insulation that are independent of the means of connection located between the non-structural door trim and the door structure.

4. Door as in claim 1, **characterized in that** there are various absorbent or insulating layers between the door structure and the removable outer skin of the door to improve the technical and acoustic behaviour of the door.

5. Door as in claim 1, **characterized in that** the non-structural door trim (1) and the window lifter mechanisms (3) are fixed to the door structure (7) by using rivets.

6. Door as in claim 1, **characterized in that** the non-structural door trim (1) and the window lifter mechanisms (3) are fixed to the door structure (7) using screws.

7. Door as in claim 1, **characterized in that** the non-structural door trim (1) consists of a single piece.

8. Door as in claim 1, **characterized in that** the non-structural door trim (1) consists of various components fixed together rigidly.

9. Door as in claims 1 and 6 **characterized in that** the mechanisms (3) of the window lifter connected to the non-structural door trim are fixed to the door structure (7) by means of screws (13) that can be handled from the outside of the door and fit into a bush (14) associated with this door structure.

10. Door as in claims 1 and 6 **characterized in that** the inner face (2) of the non-structural door trim (1) includes a lower extension (16) facing the door structure (7) containing a drilling to receive a threaded bush (19) and aligned with the hole in a piece (17) fitting in turn into a hole in the door structure (7), with a bolt (15) passing through these two pieces (16, 17) whose head can be turned from the exterior of the assembly in which a lower extension (18) to the non-structural door trim is supported on the door structure (7) receiving seals, also with a support stud (12) on the non-structural door trim at half height facing the door structure (7).

11. Door as in claims 1, 6 and 10, **characterized in that** the lower extension (16) of the inner face (2) of the non-structural door trim abuts to and aligns with the hole in the door structure (7) directly to receive the bolt (15).

12. Door as in claims 1 and 6, **characterized in that** an arm (20) projects from the inner face (2) of the non-structural door trim towards the door structure (7) at the end of which there is a trunco-conical extension (21) the front part of which has a hole to receive a bush (22) and which is next to and facing a hole in the door structure (7) in which there is a bolt (15).

## Patentansprüche

1. Tür, in der ein Türmodul montiert ist, wobei das Türmodul eine innere, nicht strukturelle Türverkleidung (1) als Trägerpaneel umfasst, worauf eine Reihe von Türkomponenten montiert ist, darin eingeschlossen mindestens Fensterhebermechanismen und eine Verriegelungsvorrichtung, wobei die Tür eine Türstruktur (7) und eine abnehmbare Außenverkleidung umfasst, wobei die Türstruktur auf einer nicht strukturellen Türverkleidungsseite mit Öffnungen ausgestattet ist, um den Türkomponenten einen Zugang durch die Öffnungen für die Anbringung der Türverkleidung an die Türstruktur bereitzustellen; wobei die Türkomponenten auf die nicht strukturelle Türverkleidung unter Verwendung von Systemen montiert werden, die einen gewissen Grad an Freiheit für eine geeignete Anpassung an das Layout der Türstruktur ermöglichen, **dadurch gekennzeichnet, dass** die innere nicht strukturelle Türverkleidung (1) aus einem einzigen Stück oder aus mehreren Stücken erstellt ist, die zusammen geschweißt sind, und frei von Öffnungen oder Zugängen aus dem Inneren des Fahrzeugs ist, so dass die nicht strukturelle Türverkleidung (1) zusammen mit ihren Türkomponenten an die Türstruktur angebracht und von der Außenseite der Türstruktur an die Tür befestigt wird, wenn die abnehmbare Außenverkleidung entfernt ist, wobei die Außenverkleidung zuletzt und unabhängig vom den übrigen Komponenten an die Türstruktur angepasst wird.

2. Tür nach Anspruch 1, **dadurch gekennzeichnet, dass** sie alle Elemente in mechanisch und elektrisch untereinander verbundenem, angepasstem und überprüftem Zustand umfasst und einsatzbereit ist, sobald sie an die Türstruktur befestigt ist.

3. Tür nach Anspruch 1, **dadurch gekennzeichnet, dass** Zwischenräume zwischen der Türstruktur und der abnehmbaren Außenverkleidung der Tür für die Versiegelungssysteme sowie Schichten von Wärmeisolierung und Schalldämpfung vorhanden sind, die von den Verbindungsmitteln, die sich zwischen der nicht strukturellen Türverkleidung und der Türstruktur befinden, unabhängig sind.

4. Tür nach Anspruch 1, **dadurch gekennzeichnet, dass** mehrere absorbierende oder isolierende Schichten zwischen der Türstruktur und der abnehmbaren Außenverkleidung der Tür vorhanden sind, um das technische und akustische Verhalten der Tür zu verbessern.

5. Tür nach Anspruch 1, **dadurch gekennzeichnet, dass** die nicht strukturelle Türverkleidung (1) und die Fensterhebermechanismen (3) unter Verwendung von Nieten an die Türstruktur (7) befestigt sind.

6. Tür nach Anspruch 1, **dadurch gekennzeichnet, dass** die nicht strukturelle Türverkleidung (1) und die Fensterhebermechanismen (3) unter Verwendung von Schrauben an die Türstruktur (7) befestigt sind.

7. Tür nach Anspruch 1, **dadurch gekennzeichnet, dass** die nicht strukturelle Türverkleidung (1) aus einem einzigen Stück besteht.

8. Tür nach Anspruch 1, **dadurch gekennzeichnet, dass** die nicht strukturelle Türverkleidung (1) aus mehreren Komponenten besteht, die starr zusammengefügt sind.

9. Tür nach Anspruch 1 und 6, **dadurch gekennzeichnet, dass** die Mechanismen (3) des Fensterhebers, die mit der nicht strukturellen Türverkleidung verbunden sind, an die Türstruktur (7) mithilfe von Schrauben (13) befestigt sind, die von außerhalb der Tür gehandhabt werden können und in eine Buchse (14) passen, die dieser Türstruktur zugeordnet ist

10. Tür nach Anspruch 1 und 6, **dadurch gekennzeichnet, dass** die Innenseite (2) der nicht strukturellen Türverkleidung (1) eine untere Erweiterung (16) umfasst, die der Türstruktur (7) gegenüberliegt, die eine Bohrung enthält, um eine Gewindebuchse (19) aufzunehmen, und die mit dem Loch in einem Stück (17) ausgerichtet ist, das seinerseits in ein Loch in der Türstruktur (7) passt, mit einem Bolzen (15), der durch diese zwei Stücke (16, 17) führt, dessen Kopf von der Außenseite der Anordnung gedreht werden kann, in der eine untere Erweiterung (18) der nicht strukturellen Türverkleidung auf der Türstruktur (7), die Dichtungen aufnimmt, getragen wird, auch mit einem Trägerstift (12) auf der nicht strukturellen Türverkleidung in halber Höhe gegenüber der Türstruktur (7).

11. Tür nach Anspruch 1, 6 und 10, **dadurch gekennzeichnet, dass** die untere Erweiterung (16) der Innenseite (2) der nicht strukturellen Türverkleidung an das Loch in der Türstruktur (7) direkt anstößt und damit ausgerichtet ist, um den Bolzen (15) aufzunehmen.

12. Tür nach Anspruch 1 und 6, **dadurch gekennzeichnet, dass** ein Arm (20) von der Innenseite (2) der nicht strukturellen Türverkleidung auf die Türstruktur (7) vorspringt, an dessen Ende eine Stumpfkegel-Erweiterung (21) vorliegt, deren vorderer Teil ein Loch aufweist, um eine Buchse (22) zu empfangen, und die in der Nähe eines Loches in der Türstruktur (7), in der sich ein Bolzen (15) befindet, ist und diesem gegenüber liegt.

## Revendications

1. Porte dans laquelle un module de porte est monté, le module de porte consistant en une garniture de porte non structurale intérieure (1) comme un panneau porteur sur lequel une série d'éléments de porte sont montés, comprenant au moins des mécanismes élévateurs de fenêtre et un dispositif de fermeture, la porte consistant en une structure de porte (7) et en un revêtement externe amovible, où la structure de porte est équipée sur un côté de la garniture de porte non structurale d'ouvertures pour fournir les éléments de porte avec accès à travers les ouvertures pour l'assemblage de la garniture de porte à la structure de porte ; les éléments de porte étant montés sur la garniture de porte non structurale en utilisant des systèmes qui permettent un certain degré de liberté pour une adaptation convenable à l'agencement de la structure de porte, **caractérisée en ce que** la garniture de porte non structurale intérieure (1) est faite en une seule pièce ou en plusieurs pièces soudées ensemble et ne possède ni ouvertures ni accès depuis l'intérieur du véhicule, pour que la garniture de porte non structurale (1) conjointement avec ses éléments de porte soient placés sur la structure de porte et fixés à la porte depuis le côté extérieur de la structure de porte lorsque le revêtement externe amovible est retiré, le revêtement externe étant ajusté en dernier et indépendamment du reste des éléments à la structure de porte.

2. Porte, comme dans la revendication 1, **caractérisée en ce qu'**elle porte tous les éléments connectés, ajustés et vérifiés mécaniquement et électriquement entre eux, prêts à fonctionner après qu'ils auront été fixés à la structure de porte.

3. Porte, comme dans la revendication 1, **caractérisée en ce qu'**il y a des espaces entre la structure de porte et le revêtement externe amovible de la porte pour les systèmes d'étanchéité ainsi que des couches d'isolation contre la chaleur et le bruit qui sont indépendantes des moyens de connexion situés entre la garniture de porte non structurale et la structure de porte.

4. Porte, comme dans la revendication 1, **caractérisée en ce qu'**il y a plusieurs couches absorbantes ou isolantes entre la structure de porte et le revêtement externe amovible de la porte pour améliorer le comportement technique et acoustique de la porte.

5. Porte, comme dans la revendication 1, **caractérisée en ce que** la garniture de porte non structurale (1) et les mécanismes élévateurs de fenêtre (3) sont fixés à la structure de porte (7) par l'utilisation de rivets.

6. Porte, comme dans la revendication 1, **caractérisée en ce que** la garniture de porte non structurale (1) et les mécanismes élévateurs de fenêtre (3) sont fixés à la structure de porte (7) par l'utilisation de vis.

7. Porte, comme dans la revendication 1, **caractérisée en ce que** la garniture de porte non structurale (1) consiste en une pièce unique.

8. Porte, comme dans la revendication 1, **caractérisée en ce que** la garniture de porte non structurale (1) consiste en plusieurs éléments fixés ensemble de façon rigide.

9. Porte, comme dans les revendications 1 et 6 **caractérisée en ce que** les mécanismes (3) de l'élévateur de fenêtre connectés à la garniture de porte non structurale sont fixés à la structure de porte (7) au moyen de vis (13) qui peuvent être manipulées depuis l'extérieur de la porte et qui s'ajustent dans une bague (14) associée à cette structure de porte.

10. Porte, comme dans les revendications 1 et 6 **caractérisée en ce que** la face interne (2) de la garniture de porte non structurale (1) comporte une extension inférieure (16) faisant face à la structure de porte (7) contenant un perçage pour recevoir une bague filetée (19) et alignée avec le trou dans une pièce (17) s'ajustant à son tour dans un trou dans la structure de porte (7), avec un boulon (15) passant à travers ces deux pièces (16, 17) dont la tête peut être tournée depuis l'extérieur de l'assemblage dans lequel une extension inférieure (18) à la garniture de porte non structurale est soutenue sur la structure de porte (7) recevant des joints, également avec un goujon de support (12) sur la garniture de porte non structurale à mi-hauteur faisant face à la structure de porte (7).

11. Porte, comme dans les revendications 1, 6 et 10, **caractérisée en ce que** l'extension inférieure (16) de la face interne (2) de la garniture de porte non structurale est contiguë à et s'aligne avec le trou dans la structure de porte (7) directement pour recevoir le boulon (15).

12. Porte, comme dans les revendications 1 et 6, **caractérisée en ce qu'**un bras (20) se projette depuis la face interne (2) de la garniture de porte non structurale vers la structure de porte (7) à l'extrémité de laquelle se trouve une extension tronconique (21) dont la partie avant possède un trou pour recevoir une bague (22) et qui est près de et faisant face à un trou dans la structure de porte (7) dans lequel il y a un boulon (15).
